Europäisches Patentamt

European Patent Office

Office européen des brevets

(19)

(11) Veröffentlichungsnummer: **0 314 119 B1**

# EUROPÄISCHE PATENTSCHRIFT

(12)

(45) Veröffentlichungstag der Patentschrift:
25.09.91 Patentblatt 91/39

(51) Int. Cl.⁵ : **B62D 33/02**

(21) Anmeldenummer: **88117876.8**

(22) Anmeldetag: **27.10.88**

(54) **Bordwandprofil mit daran angeordneter Zurrschiene und damit hergestellte Bordwand.**

(30) Priorität: **29.10.87 DE 3736648**
**19.04.88 DE 3813033**

(43) Veröffentlichungstag der Anmeldung:
**03.05.89 Patentblatt 89/18**

(45) Bekanntmachung des Hinweises auf die
Patenterteilung:
**25.09.91 Patentblatt 91/39**

(84) Benannte Vertragsstaaten:
**AT BE CH DE ES FR IT LI LU NL SE**

(56) Entgegenhaltungen:
**EP-A- 0 019 773**

(56) Entgegenhaltungen:
**AT-B- 331 647**
**DE-A- 2 260 681**
**DE-A- 3 326 105**
**DE-U- 8 605 022**
**DE-U- 8 714 405**

(73) Patentinhaber: **GROSS ALUMINIUM GMBH**
**Berner Strasse 44-48**
**W-6000 Frankfurt 56 (DE)**

(72) Erfinder: **Gross, Gerhard H., Dr.**
**Graf-Stolberg-Strasse 6**
**W-6240 Königstein (DE)**

(74) Vertreter: **Rupprecht, Klaus, Dipl.-Ing.**
**Kastanienstrasse 18**
**W-6242 Kronberg (DE)**

## Beschreibung

Bordwandprofil für Bordwände von Kraftfahrzeugen und Anhängern, welches mit weiteren Bordwandprofilen, insbesondere nach dem Snap-Lock-Prinzip miteinander verbindbar und im Wege des Strangpressens unter Bildung von Hohlkammern aus Leichtmetall hergestellt ist, wobei eine Wandung des Profils mit Ausnehmungen zur Aufnahme von Halterungen von Ladungssicherungselementen versehen ist.

Zur Sicherung der Ladung auf den Ladeflächen und in den Frachträumen von Kraftfahrzeugen und Anhängern ist es bekannt, Sicherungssysteme vorzusehen. Grundsätzlich sollen sie ein Verschieben des Ladegutes während des Transports verhindern. Dies einmal aus Gründen der Sicherheit des Straßenverkehrs, der durch vom Fahrzeug auf die Fahrbahn fallendes Transportgut gefährdet werden kann. Zum anderen auch zum Schutze des Ladegutes selbst gegen Beschädigung, die durch Verschieben oder Verrücken während der Fahrt und hierdurch verursachten harten Aufprall der Transportlücke untereinander und gegen die Bordwände möglich ist. Die Ladungssicherungssysteme bestehen grundsätzlich aus sogenannten Zurrschienen, die an den Bordwänden der Fahrzeugaufbauten innen angebracht werden. In der Regel erstrecken sich diese Zurrschienen über die gesamte Länge der beiden Längsbordwände. Sie weisen Ausnehmungen und dazwischen angeordnete Stege auf, so daß Zurrgurte befestigt werden können, welche das Ladegut in der gewünschten Weise festlegen.

Auch ist es bekannt, quer über die Ladefläche der Fahrzeuge Riegel aus Holz oder Leichtmetall vorzusehen, die in den Zurrschienen beispielsweise festgesteckt werden können.

Die Zurrschienen selbst werden bisher mit vergleichsweise großem Aufwand in den aus Holz bestehenden Bordwänden versenkt angeordnet. Hierzu müssen entsprechende Nuten in die Bordwände eingefräst werden. Sofern die Zurrschienen nicht in dieser Weise versenkt angeordnet werden, ragen sie in den Laderaum des Fahrzeugs hinein, was vermieden werden sollte. Die Paletten sind unter Berücksichtigung der gesetzlichen Bestimmungen genormt (Straßenverkehrsordnung und Straßenverkehrszulassungsordnung). Bereits ein geringer Überstand der Zurrschienen von wenigen Zentimetern in die Ladefläche hinein würde dazu führen, daß über die Breite der Ladefläche gesehen, eine Palette weniger geladen werden könnte.

Derzeit geht die Tendenz bei Bordwänden von Ladeflächen für Fahrzeuge dahin, sie anstelle von Holzprofilen aus Leichtmetallprofilen zu fertigen ; vgl. die DE-OS 2260681. Die Profile werden nach dem sogenannten Snap-Lock-Prinzip zusammengesteckt. Aus den Unterlagen des DGBM 8605022 ist es in diesem Zusammenhang bekannt, Bordwandprofile im Wege des Strangpressens mit einer oder mehreren Halterungen für einzusetzende oder einzuschiebende Zurrschienen zu versehen. In der AT-PS 331647 ist schließlich ein ebenfalls nach dem Snap-Lock-Prinzip aufgebautes Bordwandprofil beschrieben, welches eine Hohlkammer bildet, die mit Bohrungen zur Aufnahme von Befestigungselementen versehen ist. Dieses vorbekannte Profil weist indessen nur vergleichsweise geringe Festigkeit auf, da sich die Hohlkammer nur über einen Teilbereich des gesamten Profiles erstreckt. Letzteres besteht vielmehr über fast seine gesamte Fläche aus einem einfachen Metallblech, so daß das Profil nur geringe Verwindungssteifigkeit aufweist. Hierdurch ist sein Einsatz im Fahrzeugbau recht beschränkt.

Demgegenüber besteht die Aufgabe der Erfindung darin, ein Bordwandprofil der eingangs genannten Art zu schaffen, das sich neben einer raumsparenden Anordnung der Zurrschiene insbesondere durch eine wesentlich gesteigerte Eigensteifigkeit auszeichnet, wie diese vom Fahrzeugbau grundsätzlich gefordert wird.

Diese Aufgabe ist gemäß der Erfindung dadurch gelöst, daß die Ausnehmungen zur Aufnahme der Halterungen der Ladungssicherungselemente in einem separaten schienenförmigen Bauteil vorgesehen sind, und daß dieses Bauteil mittels einer Schnappsitzverbindung in einer korrespondierenden Ausnehmung des Bordwandprofils angeordnet ist.

Das erfindungsgemäße Bordwandprofil besteht somit zunächst grundsätzlich aus zwei Hohlkammerprofilen, die über einen Steg miteinander verbunden sind. Im Bereich des Steges ist ein weiterer Schnappsitz zur Aufnahme der Zurrschiene vorgesehen. Nach Einführen und Zusammenschnappen von Bordwandprofil und Zurrschiene ergibt sich sodann ein Bordwandprofil mit drei Hohlkammern und insgesamt das angestrebte, große Eigensteifigkeit aufweisende Profil. Bei dem Schnappsitz handelt es sich um eine praktisch unlösbare, feste Verbindung, so daß die Verwindungssteifigkeit des erfindungsgemäßen Bordwandprofiles praktisch mit der eines gleichartigen, einstückigen Profils zu vergleichen ist. Das erfindungsgemäße Bordwandprofil kann somit beim Bau für Ladeflächen von Fahrzeugen eingesetzt werden, wobei bei der Auslegung im wesentlichen von der gleichen Verwindungssteifigkeit ausgegangen werden kann, wie bei den angrenzenden Hohlkammerprofilen, die einstückig extrudiert sind.

Die Erfindung macht sich in überaus vorteilhafter Weise die Technologie zunutze, die bei der Herstellung der Bordwandprofile an sich, nämlich das Strangpressen oder Extrudieren, ohnehin benutzt wird. Sowohl das Bordwandprofil mit Schnappsitz zur Aufnahme des schienenförmigen Bauteils, also der Zurrschiene, als auch die Zurrschiene selbst werden jeweils im Wege des Strangpressens erzeugt. Das später als Zurrschiene die-

2

nende schienenförmige Bauteil ist nunmehr nicht mehr ein Hohlkammern aufweisendes Bauteil, sondern eine flache Schiene, die kosteneffizient mit den erforderlichen Ausnehmungen in bekannter Weise, also wiederum Bohren, Fräsen, Stanzen od. dgl., versehen werden kann. Bei diesen Bearbeitungsvorgängen besteht kaum die Gefahr einer Deformierung des schienenförmigen Bauteils, da praktisch ohne jeglichen Aufwand für eine satte Auflage des Bauteils während der Ausformung der Ausnehmungen Sorge getragen werden kann.

Erfindungsgemäß ist weiterhin vorgesehen, daß ein Längskantenbereich des schienenförmigen Bauteils zusammen mit dem korrespondierenden Kantenbereich des Bordwandprofils nach Art eines Drehgelenks und der gegenüberliegende Längskantenbereich des schienenförmigen Bauteils zusammen mit dem seinerseits korrespondierenden Kantenbereich des Bordwandprofils als Schnappsitz ausgebildet sind.

Diese erfindungsgemäße Weiterbildung erleichtert das Einsetzen oder die Anordnung des schienenförmigen Bauteils in das Bordwandprofil, wobei nach einem weiteren Merkmal der Erfindung vorgesehen sein kann, daß das schienenförmige Bauteil im Bereich des Drehgelenkes mit einem federnden Ansatz versehen ist. Dieser Ansatz kann so ausgebildet sein, daß er im eingerasteten, also eingeschnapptem Zustand der Zurrschiene in dem Bordwandprofil eine gewisse Vorspannung ausübt und somit die Zurrschiene unter Federkraft und Vermeidung von Klappergeräuschen während des Betriebs eines Fahrzeugs, das mit den erfindungsgemäßen Bordwandprofilen ausgestattet ist, anliegt.

Die Erfindung umfaßt auch eine Bordwand, die unter Verwendung von Bordwandprofilen mit mindestens einem der erfindungsgemäßen Merkmale hergestellt ist.

Weitere Einzelheiten, Merkmale und Vorteile der Erfindung ergeben sich aus der folgende Beschreibung eines Ausführungsbeispiels sowie anhand der schematischen Zeichnung.

Es zeigen :

Fig. 1    eine schaubildliche Darstellung eines erfindungsgemäßen Bordwandprofils mit eingeschnappter Zurrschiene ;

Fig. 2    eine Stirnansicht des Gegenstands der Fig. 1 und

Fig. 3    Stirnansichten dreier Bordwandprofile mit eingeschnappter Zurrschiene gemäß der Erfindung.

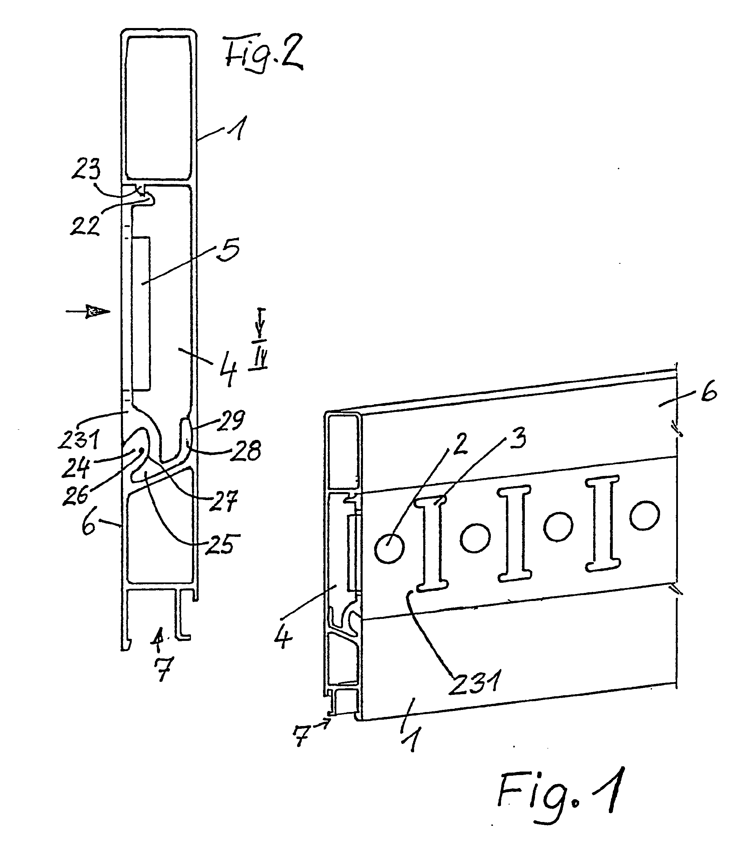

Gemäß Fig. 1 ist ein erfindungsgemäßes Bordwandprofil mit 1 bezeichnet. Es ist abwechselnd mit Ausnehmungen 2 und 3 unterschiedlicher konfiguration versehen, die jedoch auch gleich ausgeführt sein können und in ihrer Gesamtheit längs der Längsachse des Bordwandprofiles 1 im einer sogenannten Zurrschiene 231 vorgesehen sind.

Die Ausnehmungen 2 und 3 entsprechen in ihrer Form und Größe Anschluß- oder Verbindungselementen von nicht gezeigten Sicherungssystemen, wie Zurrgurte oder Sperrstangen, die mit ihren Anschlußelementen in jeweils korrespondierende Ausnehmungen 2 oder 3 eingesetzt oder dort festgelegt werden. Mit diesen Sicherungselementen kann Ladung auf einem Fahrzeugaufbau gegen Verschieben oder Verrutschen befestigt werden. Derartige Ladungssicherungssysteme sind an sich bekannt.

Die Ausnehmungen 2, 3 können beispielsweise durch Bohren, Fräsen, Stanzen oder Drücken in der Zurrschiene 231 vorgesehen werden. Werden die Ausnehmungen 2, 3 gedrückt oder gepreßt so kann ein bogenförmiger Lappen 5 erzeugt werden. Diese Ausbildung trägt zum einen zu einer Aussteifung der Zurrschiene 231 des Profils 1 bei. Besonders vorteilhaft hierbei ist jedoch, daß durch die Abrundung der Kanten einem Durchscheuern der mittels entsprechend ausgestalteter Anschlußelemente in die Ausnehmung 3 eingehängten Zurrgurte vorgebeugt wird.

In den Fig. 1 und 2 ist ein erfindungsgemäßes Bordwandprofil gezeigt, welches als oberen Abschlußprofil von Bordwänden eines Fahrzeugaufbaus Verwendung finden kann. An seinem in der Zeichnung gezeigten unteren Ende ist es mit einem an sich bekannten Schnappsitz 7 versehen, der auf ein korrespondierend ausgebildetes Gegenstück einen weiteren Bordwandprofils aufgesteckt wird, um so, ggf. noch mit weiteren Profilen eine Bordwand zu bilden.

Das erfindungsgemäße Bordwandprofil mit integrierter Zurrschiene 231 kann umlaufend an einem Kraftfahrzeugaufbau oder Anhänger vorgesehen sein. Es ist jedoch auch möglich, derartige Schienen vorzugsweise auf gleicher Höhe an einander gegenüberliegenden oder auch nur an Einzelwänden einzubauen.

Die Zurrschiene 231 ist, wie aus der Zeichnung ersichtlich, in das eigentliche Bordwandprofil 1 eingeschnappt. Zu diesem Zweck ist im Bereich der einen Längskante eine Nase 22 mit Widerhaken vorgesehen, die im eingeschnappten Zustand, vgl. Zeichnung, einen Ansatz 23 hintergreift.

An der gegenüberliegenden Längskante der Zurrschiene 231 ist eine Art Drehgelenkverbindung vorgesehen, wobei ein Ansatz 25 der Zurrschiene 231 eine Nase 26 des Bauteils 1 umgreift. Wesentlich ist hier die im Querschnitt kreisbogenförmige Ausbildung 27 der Nase 26 und die korrespondierende Ausbildung des Ansatzes 26, wodurch die Zurrschiene 231 zuverlässig und mit vergleichsweise geringem Widerstand beim Anbringen oder Einsetzen in das Bordwandprofil in dieses eingeklappt und über die Nase 22 und Ansatz 23 verrastet

3

werden kann.

Im Bereich des Ansatzes 25 der Zurrschiene 231 ist weiterhin eine Federzunge 28 vorgesehen, die an ihrer Oberfläche wiederum etwa kreisförmig ausgebildet ist und in einer korrespondierenden Kontur 29 des Bordwandprofils 1 anliegt. Auf diese Weise wird das vorstehend beschriebene Einrasten des schienenförmigen Bauteils oder der Zurrschiene 231 weiter erleichtert, wobei aufgrund der erwähnten Vorspannung ein zuverlässiger Sitz der gesamten Zurrschiene 231 im Bordwandprofil 1 unterstützt wird.

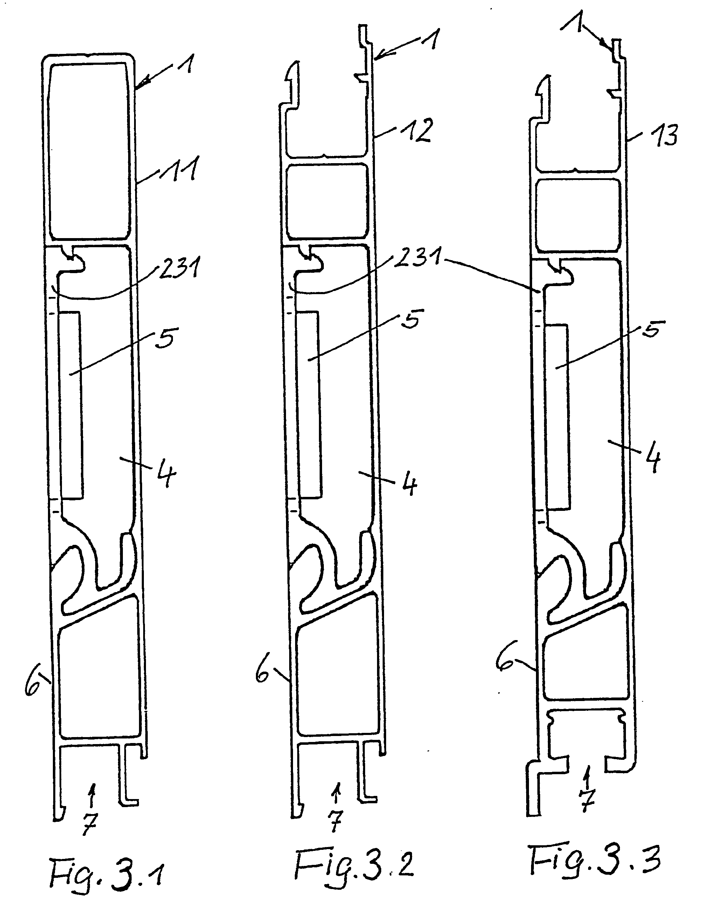

In der Fig. 3 sind in Stirnansicht die drei Bordwandprofile gezeigt, die zum Aufbau einer Bordwand an sich zweckmäßig sind. Fig. 3 gibt ein Profil für die Oberkante der Borwand wieder, Fig. 3.3 das Profil, das am Fahrzeugaufbau angelenkt wird und Fig. 3.2 das Bordwandprofil, das zwischen den Gegenständen der Fig. 3.1 und 3.3 vorgesehen wird, wobei auch mehrere solcher Profile gemäß Fig. 3.2 übereinander angeordnet werden können. Sämtliche Profile sind über eine Schnappsitzverbindung miteinander verbunden.

In der Fig. 3 ist gezeigt, daß alle diese Profile gemäß der Erfindung mit einer einschnapp- oder einrastbaren Zurrschiene 231 versehen werden können, wie dies bereits vorstehend beschrieben wurde. Aus den drei Profilen gemäß Fig. 3 kann somit eine Bordwand zusammengestellt werden.

Die Fig. 3 zeigt, daß jedes dieser Profile geeignet ist, mit einer einschnappbaren Zurrschiene 231 versehen zu werden. Die Bordwandprofile 1 sowie das schienenförmige Bauteil oder die Zurrschiene 231 können in bekannter Weise aus Leichtmetall im Wege des Strangpressens hergestellt werden.

## Patentansprüche

1. Bordwandprofil (1) für Bordwände von Kraftfahrzeugen und Anhängern, welches mit weiteren Bordwandprofilen, insbesondere nach dem Snap-Lock-Prinzip miteinander verbindbar und im Wege des Strangpressens unter Bildung von Hohlkammern aus Leichtmetall hergestellt ist, wobei eine Wandung (6) des Profils mit Ausnehmungen (2, 3) zur Aufnahme von Halterungen von Ladungssicherungselementen versehen ist, dadurch gekennzeichnet, daß die Ausnehmungen (2, 3) zur Aufnahme der Halterungen der Ladungssicherungselemente in einem separaten schienenförmigen Bauteil (231) vorgesehen sind, und daß dieses Bauteil (231) mittels einer Schnappsitzverbindung in einer korrespondierenden Ausnehmung des Bordwandprofils (1) angeordnet ist.

2. Bordwandprofil nach Anspruch 1, dadurch gekennzeichnet, daß ein Längskantenbereich des schienenförmigen Bauteils (231) zusammen mit dem korrespondierenden Kantenbereich des Bordwandprofils (1) nach Art eines Drehgelenks und der gegenüberliegende Längskantenbereich des schienenförmigen Bauteils (231) zusammen mit dem seinerseits korrespondierenden Kantenbereich des Bordwandprofils (1) als Schnappsitz ausgebildet sind.

3. Bordwandprofil nach mindestens Anspruch 1 oder 2, dadurch gekennzeichnet, daß das schienenförmige Bauteil (231) im Bereich des Drehgelenks (24) mit einem federnden Ansatz (28) versehen ist.

4. Bordwandprofil nach mindestens einem der Ansprüche 1 bis 3, dadurch gkennzeichnet, daß abwechselnd Ausnehmungen (2, 3) unterschiedlicher Konfiguration in dem schienenförmigen Bauteil (231) vorgesehen sind.

5. Profil nach mindestens einem der Ansprüche 1 bis 4, dadurch gekennzeichnet, daß die Ränder der Ausnehmungen (2, 3) mindestens teilweise in Richtung zum Innern des In das Profil eingesetzten schienenförmigen Bauteils (231) umgebogen sind.

6. Bordwand, hergestellt mit Bordwandprofilen (1) und einschnappbarem schienenförmigem Bauteil (231) nach mindestens einem der Ansprüche 1 bis 5.

## Claims

1. Side wall profile (1) for side walls of motor vehicles and trailers which can be connected to further side wall profiles, in particular one to the other in accordance with the snap-lock principle, and is produced from light metal by the method of extrusion forming hollow chambers, one wall (6) of the profile being provided with recesses (2, 3) for receiving brackets of load-securing elements, characterised in that the recesses (2, 3) for receiving the brackets of the load-securing elements are provided in a separate rail-shaped component (231), and in that the said component (231) is arranged in a corresponding recess of the side wall profile (1) by means of a snap-fit connection.

2. Side wall profile according to Claim 1, characterised in that a longitudinal edge region of the rail-shaped component (231), together with the corresponding edge region of the side wall profile (1), is constructed in the manner of a rotary joint and the opposite longitudinal edge region of the rail-shaped component (231), together with the for its part corresponding edge region of the side wall profile (1), is constructed as a snap-fit connection.

3. Side wall profile according to at least Claim 1 or 2, characterised in that the rail-shaped component (231) is provided in the region of the rotary joint (24) with a resilient extension (28).

4. Side wall profile according to at least one of Claims 1 to 3, characterised in that recesses (2, 3) of different configuration are alternately provided in the rail-shaped component (231).

5. Profile according to at least one of claims 1 to 4, characterised in that the edges of the recesses (2, 3) are bent over at least partially in the direction towards the interior of the rail-shaped component (231) inserted into the profile.

6. Side wall, manufactured with side wall profiles (1) and snap-in rail-shaped component (231) according to at least one of Claims 1 to 5.

## Revendications

1. Profil de ridelle (1) pour ridelle de camions et de remorques, qu'on peut relier à d'autres profils de ridelle notamment avec le système Snap-lock et qu'on produit par une presse à extruder en formant des chambres creuses en métal léger, une paroi (6) du profil étant munie d'évidements (2, 3) pour recevoir les attaches des éléments de fixation de la charge, caractérisé en ce qu'on prévoit les évidements (2, 3) de réception des attaches des éléments de fixation de la charge dans une pièce constitutive (231) séparée en forme de rail, et qu'on place cette pièce constitutive (231) au moyen d'une liaison encliquetable dans un évidement correspondant du profil de ridelle (1).

2. Profil de ridelle selon la revendication 1, caractérisé en ce qu'on réalise en siège de clipsage une zone de bord longitudinal de la pièce constitutive (231) en forme de rail avec la zone de bord correspondante du profilé de ridelle (1) selon le type d'une articulation rotative et la zone de bord longitudinal opposé de la pièce constitutive (231) en forme de rail avec la zone de bord correspondante du profil de ridelle (1).

3. Profil de ridelle selon au moins la revendication 1 ou 2, caractérisé en ce qu'on équipe la pièce constitutive (231) en forme de rail dans la zone de l'articulation rotative (24) d'un prolongement (28) faisant ressort.

4. Profil de ridelle selon au moins une des revendications 1 à 3, caractérisé en ce qu'on prévoit en alternance des évidements (2, 3) de configurations différentes dans la pièce constitutive en forme de rail (231).

5. Profilé selon au moins l'une des revendications 1 à 4, caractérisé en ce que les bords des évidements (2, 3) sont incurvés au moins partiellement vers l'intérieur de la pièce constitutive (231) en forme de rail implantée dans le profil.

6. Ridelle produite avec des profils de ridelle (1) et avec une pièce constitutive (231) en forme de rail encliquetable selon au moins l'une des revendications 1 à 5.

Fig.2

Fig. 1

Fig. 3.1    Fig. 3.2    Fig. 3.3